# EUROPÄISCHE PATENTSCHRIFT

(11) **EP 3 896 663 B1**
(45) Veröffentlichungstag und Bekanntmachung des Hinweises auf die Patenterteilung: **22.07.2026**
(21) Anmeldenummer: 21168519.3
(22) Anmeldetag: 15.04.2021
(51) Int. Cl.: H04N 1/00, G07F 19/00, G07F 7/08, G06Q 20/18

(54) **SELBSTBEDIENUNGSAUTOMAT**
SELF-SERVICE MACHINE
MACHINE EN LIBRE-SERVICE

(30) Priorität: 17.04.2020 DE 102020110552
(43) Veröffentlichungstag der Anmeldung: 20.10.2021
(73) Patentinhaber: KEBA Handover Automation GmbH, 4040 Linz (AT)
(72) Erfinder: BAUMANN, Claus, 4040 Linz (AT)
(74) Vertreter: HKW Intellectual Property PartG mbB

(56) Entgegenhaltungen:
- CN-U- 209 560 226
- JP-A- 2017 174 183
- ANONYMOUS: "Camera Triggering using Seagull REC - Plane documentation", 8 August 2019 (2019-08-08), pages 1 - 2, XP093180429, Retrieved from the Internet <URL:https://batavia.internal.epo.org/citenpl/citation/prod/pdf/bd03da84-dfd4-3a2d-a380-ed01d58a6a3b.pdf> [retrieved on 20240701]

## Beschreibung

### TECHNISCHES GEBIET

Die Erfindung betrifft einen Selbstbedienungsautomaten mit einer Scanner-Einrichtung zum Scannen von Objekten, wie zum Beispiel von Dokumenten. Des Weiteren betrifft die vorliegende Erfindung ein Verfahren sowie ein Computerprogrammprodukt zum Betreiben eines Selbstbedienungsautomaten.

### STAND DER TECHNIK

Das vorliegende technische Gebiet betrifft einen Selbstbedienungsautomaten, wie zum Beispiel einen Geldautomaten oder ein Kontoserviceterminal, mit einer Scanner-Einrichtung zum Scannen von Objekten. Die Scanner-Einrichtung umfasst einen Scannerschacht mit einem transparenten Boden, eine Rückwand, zwei Seitenwände, einen Deckel, einseitig eine Öffnung und einen unterhalb des transparenten Bodens angeordneten optischen Sensor zum Aufnehmen eines optischen Sensorsignals eines über dem transparenten Boden angeordneten Objekts.

Es gibt viele Personen, wie Kunden oder Benutzer des Selbstbedienungsautomaten, die Angst haben, ihre Hand in einen Schacht über die nur einseitige Öffnung, wie beispielsweise in den Scannerschacht eines solchen Selbstbedienungsautomaten zu stecken, wenn sie ihre Hand nicht sehen können. Eine solche Angst oder Unsicherheit birgt auch die Gefahr, dass das zu scannende Dokument nicht korrekt in dem Scannerschacht für ein anschließendes Scannen ausgerichtet wird. Im schlechtesten Fall kann das zu scannende Dokument nicht korrekt von dem Selbstbedienungsautomaten gescannt werden. Auch ist die Benutzerfreundlichkeit hierdurch stark eingeschränkt.

Die JP 2017 174183 A offenbart einen Selbstbedienungsautomaten umfassend eine Lesevorrichtung, die Fehler beim Lesen von Dokumenten verhindern soll.

### OFFENBARUNG DER ERFINDUNG

Es ist eine Aufgabe der vorliegenden Erfindung, den Betrieb eines Selbstbedienungsautomaten zu verbessern.

Die gestellte Aufgabe wird durch einen Selbstbedienungsautomaten mit den Merkmalen des Anspruchs 1, durch ein Verfahren zum Betreiben eines Selbstbedienungsautomaten mit den Merkmalen des Anspruchs 12 sowie durch ein Computerprogrammprodukt mit den Merkmalen des Anspruchs 13 gelöst.

Gemäß einem ersten Aspekt wird ein Selbstbedienungsautomat vorgeschlagen, welcher einer Scanner-Einrichtung zum Scannen von Objekten umfasst. Die Scanner-Einrichtung hat einen Scannerschacht mit einem transparenten Boden, einer Rückwand und einem Deckel, eine zumindest einseitige Öffnung und einen unterhalb des transparenten Bodens angeordneten optischen Sensor zum Aufnehmen eines optischen Sensorsignals eines über dem transparenten Boden angeordneten Objekts. Die Scanner-Einrichtung kann ferner zwei Seitenwände aufweisen. Der Deckel weist einen schaltbaren Lichtschutz mit zwei Betriebsarten umfassend einen transparenten Modus und einen intransparenten Modus auf. Ferner ist eine Steuereinheit vorgesehen, welche zum Umschalten des schaltbaren Lichtschutzes zwischen dem transparenten Modus und dem intransparenten Modus eingerichtet ist.

Der Selbstbedienungsautomat umfasst insbesondere eine Steuervorrichtung, wie einen Computer oder Steuerrechner, eine Netzwerkanbindung zur Datenkommunikation, ein Netzteil zur Spannungsversorgung, eine Eingabevorrichtung zur Eingabe von Benutzereingaben, wie eine Tastatur, zum Beispiel eine virtuelle Tastatur an einem Touchscreen oder eine virtuelle Tastatur, und eine Anzeige, zum Beispiel in Form des oben genannten Displays. Die Steuereinheit ist insbesondere als Teil der Steuervorrichtung implementiert.

Der schaltbare Lichtschutz kann insbesondere auch als schaltbarer Sichtschutz bezeichnet werden.

Der optische Sensor kann auch als Bildsensor bezeichnet werden. Der optische Sensor ist beispielsweise als eine Kamera oder als ein Scanner ausgebildet. In dem intransparenten Modus kann der optische Sensor das optische Sensorsignal des Objekts ohne störendes Streulicht von der Hinterseite des Objekts mittels Einschaltens des Lichtschutzes durch den transparenten Boden hindurch aufnehmen.

Der intransparente Modus kann auch als Scanmodus bezeichnet werden. Der transparente Modus kann auch als Einrichtmodus bezeichnet werden. Einrichtmodus deswegen, weil in diesem Modus der Benutzer seine eigene Hand durch den transparenten Lichtschutz sehen kann, und das zu scannende Objekt entsprechend auf dem transparenten Boden der Scanner-Einrichtung ausrichten kann.

Wie eingangs ausgeführt, gibt es viele Personen, die Angst haben, die Hand in einen Schacht zu stecken, wobei sie die eigene Hand nicht sehen können. Um den handelnden Personen diese Angst zu nehmen, wird der Lichtschutz in den transparenten Modus geschaltet, um diesen - nur während der kurzen Scannphase - in den intransparenten Modus zu schalten. Durch die Umschaltung des Lichtschutzes wird das ungewollte Streulicht bzw. Rücklicht reduziert, und das Nutzlicht (von der Lichtquelle bei der Kamera) kann besser die Wirkung entfalten. Insbesondere können auf dem aufgenommenen Bild eventuelle Abbildungen oder Text von der Rückseite des Objekts unterdrückt werden, wenn das Durchlicht abgeschwächt bzw. bis auf null reduziert wird.

Gemäß einer Ausführungsform ist der schaltbare Lichtschutz als ein elektrisch schaltbarer Lichtschutz ausgebildet. Dabei ist die Steuereinheit dazu eingerichtet, den elektrisch schaltbaren Lichtschutz mittels einer elektrischen Spannung zwischen dem transparenten Modus und dem intransparenten Modus umzuschalten.

Gemäß einer weiteren Ausführungsform weist der schaltbare Lichtschutz eine PDLC-Folie oder eine Mehrzahl von PDLC-Folienschichten auf.

Eine PDLC-Folie (Polymer Dispersed Liquid Crystal) wird durch das Anlegen einer elektrischen Spannung transparent. PDLC-Folien basieren auf einem Polymer-Flüssigkristall-Film, der zwischen zwei Folien eingebettet ist. Dieser wird mit einer Stromquelle verbunden. Innerhalb des festen Polymers befinden sich die willkürlich orientierten Flüssigkristallmoleküle. Einfallendes Licht wird von diesen Molekülen gestreut und die Folie ist opak, wirkt fürs menschliche Auge also nicht transparent, sondern eher wie Milchglas. Mit dem Anlegen einer elektrischen Spannung ordnen sich die Flüssigkristallmoleküle im elektrischen Feld neu aus, und die Folie erscheint transparent. Bei einem erneuten Wegfall der Spannung sind die Flüssigkristallmoleküle wieder ungeordnet und die Folie wird wieder undurchsichtig.

Gemäß einer weiteren Ausführungsform weist der Deckel eine Trägerschicht auf, auf welcher der schaltbare Lichtschutz angeordnet ist, insbesondere laminiert ist. Bei der Ausführungsform der PDLC-Folie als schaltbarer Lichtschutz ist das Glas der Trägerwerkstoff für die aufgebrachte PDLC-Folie.

Gemäß einer weiteren Ausführungsform umfasst die Trägerschicht ein Glas oder ein Acrylglas.

Gemäß einer weiteren Ausführungsform weist der schaltbare Lichtschutz ein elektrochromes Glas auf.

Das elektrochrome Glas kann auch als Smartglas bezeichnet werden. Bei dem elektrochromen Glas ist die als schaltbarer Lichtschutz wirkende Folie oder Schicht in dem Glas integriert. PDLC-Glas basiert auf einem Polymer-Flüssigkristall-Film, der zwischen zwei Glasschichten eingebettet ist. Dieser wird mit einer Stromquelle verbunden. Innerhalb des festen Polymers befinden sich beliebig orientierte Flüssigkristallmoleküle. Einfallendes Licht wird von diesen Molekülen gestreut und das Glas ist opak, wirkt fürs menschliche Auge also nicht transparent, sondern eher wie ein Milchglas. Mit dem Anlegen einer elektrischen Spannung ordnen sich die Flüssigkristallmoleküle im elektrischen Feld neu aus, und das Glas erscheint transparent. Bei einem Wegfall der Spannung sind die Flüssigkristallmoleküle wieder ungeordnet und das Glas wird wieder undurchsichtig. Der Aufbau des Smartglases ist ähnlich einem Verbundfensterglas, wobei sich in der Mitte zwischen zwei Glasscheiben ein Vakuum befinden kann. In diesem Zwischenbereich ist dann die Folie oder Schicht eingebaut.

Gemäß einer weiteren Ausführungsform umfasst die Trägerschicht ein Acrylglas, welches dazu geeignet ist, auf eine Oberfläche des Acrylglases einfallendes Licht über seine Seitenflächen abzuleiten.

Polymethylmethacrylat (Kurzzeichen PMMA, auch Acrylglas) ist ein transparenter thermoplastischer Kunststoff. Bekannt wurde Polymethylmethacrylat (PMMA) unter dem Handelsnamen Plexiglas. PMMA besitzt eine ausgezeichnete Lichtdurchlässigkeit (92 Prozent) und bietet dank der Verarbeitung im Spritzgussverfahren zahlreiche Formmöglichkeiten, die wiederum Vorteile für die Abdeckung für Streulicht haben. Der thermoplastische Spezialkunststoff Polymethylmethacrylat ist sehr flexibel, es können die Formmassen aus Acrylglas als glasklare Abdeckung ebenso hergestellt werden wie mit Strukturen oder mit speziellen lichtstreuenden Eigenschaften. Somit bietet PMMA nicht nur Vorteile hinsichtlich Robustheit, Langlebigkeit und Lichtbeständigkeit, sondern ermöglichen auch eine präzise Lichtverteilung mit geringen Streuverlusten - ein nicht zu unterschätzender Faktor bei einer effizienten Lichtleitung.

Gemäß einer weiteren Ausführungsform ist der optische Sensor als eine Kamera mit vorgeschalteter Optik ausgebildet, wobei die Kamera mit der vorgeschalteten Optik in einem Scannertrichter unterhalb des transparenten Bodens angeordnet ist. Die kann beispielsweise eine Kamera mit Autofokus, eine Kamera mit Fixfokus-Objektiv oder eine Fischaugenkamera sein.

Gemäß einer weiteren Ausführungsform weist der optische Sensor ferner eine der Kamera zugeordnete und in dem Scannertrichter angeordnete Beleuchtungseinheit auf.

Um eine möglichst homogene Ausleuchtung am Objekt auf dem transparenten Boden zu erreichen, sind die Lichtquellen der Beleuchtungseinheit vorzugsweise rund um den optischen Sensor angeordnet. Auf Grund des dichtgedrängten Aufbaus im Selbstbedienungsautomaten und der starken Abwärme konventioneller Leuchtmittel, werden vorzugsweise LEDs (Light-Emitting-Diodes) eingesetzt.

Gemäß Anspruch 1 ist die Steuereinheit dazu eingerichtet, zwischen dem transparenten Modus und dem intransparenten Modus in Abhängigkeit eines Trigger-Signals umzuschalten. Die Steuereinheit kann eine eigene oder dedizierte Einheit sein. Die Funktion der Steuereinheit kann aber auch von dem zentralen PC oder dem zentralen Steuerrechner übernommen werden.

Gemäß dem ersten Aspekt ist das Trigger-Signal von einer Applikations-Software des Selbstbedienungsautomaten bereitgestellt.

Gemäß einer weiteren Ausführungsform weist der optische Sensor eine Kamera mit Autofokus auf, wobei das Trigger-Signal in Abhängigkeit eines Scharfstellens durch den Autofokus der Kamera auf dem Objekt generiert wird.

Gemäß einer weiteren Ausführungsform ist der Selbstbedienungsautomat als ein Geldautomat, als ein Kontoserviceterminal, als ein Dienstleistungsautomat, als ein Selbstverkäufer oder als eine Paketstation ausgebildet.

Das Kontoserviceterminal ist ein Bankservicegerät, welches keine Geldauszahlung vornehmen kann, aber Kontostände anzeigen und insbesondere Kontoauszüge drucken kann.

Der Geldautomat kann auch als Bankautomat, Bankomat oder Geldausgabeautomat bezeichnet werden. Der Geldautomat ist dabei eine technische Einrichtung, welche zur Bargeldabhebung oder zusätzlich auch zur Bargeldeinzahlung bei Geld- und Kreditinstituten, Banken und Sparkassen geeignet ist. Der Geldautomat hat eine Safe-Einheit und eine Bedien-Einheit. Die Bedien-Einheit umfasst ein Banknoten-Modul zum Auszahlen von Banknoten aus der Safe-Einheit und/oder zum Einzahlen von Banknoten in die Safe-Einheit. Darüber hinaus umfasst die Bedien-Einheit eine Eingabe-Einrichtung für Eingaben eines Benutzers. Die Eingabe-Einrichtung umfasst beispielsweise die oben erwähnte Tastatur.

Gemäß einer weiteren Ausführungsform ist das Objekt ein Dokument, ein Papier-Dokument, ein elektronisches Dokument, ein Identitätsnachweis oder eine bildhafte Codedarstellung, beispielsweise auf einem Brief oder auf einem Paket.

Das Papier-Dokument ist beispielsweise ein Erlagschein, ein Zahlschein oder ein Überweisungsträger. Das elektronische Dokument ist beispielsweise ein Abholungscode eines Paketautomaten. Die bildhafte Codedarstellung ist beispielsweise als ein QR-Code oder als ein Bar-Code ausgebildet, kann sowohl auf einen Papier-Dokument als auch auf einem Display beispielsweise eines Smartphones angezeigt werden. Der Identitätsnachweis ist beispielsweise ein Reisepass.

Gemäß einer weiteren Ausführungsform umfasst der Selbstbedienungsautomat eine Zeichenerkennungseinheit zur automatischen Erkennung von Zeichen in dem Objekt basierend auf dem aufgenommenen optischen Sensorsignal des Objekts.

Die Zeichenerkennungseinheit ist insbesondere eine optische Zeichenerkennung oder OCR (Optical Character Recognition). Diese Zeichenerkennung kann sowohl Zahlen, Buchstaben, wie auch eventuell vorhandene chinesische Zeichen und dergleichen erkennen.

Die jeweilige Einheit, zum Beispiel die Steuereinheit, kann hardwaretechnisch und/oder auch softwaretechnisch oder als Kombination aus beidem implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit oder ein Teil der Einheit als Computerprogrammprodukt, als eine Funktion, als eine Routine, als eigenständiger Prozess, als Teil eines Programmcodes und/oder als ausführbares Objekt ausgebildet sein. Die genannten jeweiligen Einheiten können auch in mehreren eigenständigen Prozessorkernen innerhalb eines gemeinsamen integrierten Schaltkreises implementiert sein beziehungsweise in diesen zur Ausführung gelangen.

Gemäß einem zweiten Aspekt wird ein Verfahren zum Betreiben eines Selbstbedienungsautomaten mit einer Scanner-Einrichtung zum Scannen von Objekten vorgeschlagen. Die Scanner-Einrichtung hat einen Scannerschacht mit einem transparenten Boden, einer Rückwand und einem Deckel und einen unterhalb des transparenten Bodens angeordneten optischen Sensor zum Aufnehmen eines optischen Sensorsignals eines über dem transparenten Boden angeordneten Objekts. Bei dem Verfahren wird ein als Teil des Deckels ausgebildeter schaltbarer Lichtschutz zwischen zwei Betriebsarten umfassend einen transparenten Modus und einen intransparenten Modus umgeschaltet.

Die für den vorgeschlagenen Selbstbedienungsautomaten beschriebenen Ausführungsformen und Merkmale gelten für das vorgeschlagene Verfahren entsprechend.

Gemäß einem dritten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Seitenansicht einer ersten Ausführungsform eines Selbstbedienungsautomaten;
- Fig. 2: zeigt eine schematische Ansicht der Ausführungsform der Scanner-Einrichtung nach Fig. 1 im Einrichtmodus;
- Fig. 3: zeigt eine schematische Ansicht der Ausführungsform der Scanner-Einrichtung nach Fig. 2 im Einrichtmodus und eingezeichneten Strahlengängen;
- Fig. 4: zeigt eine schematische Ansicht der Ausführungsform der Scanner-Einrichtung nach Fig. 1 im Scanmodus;
- Fig. 5: zeigt eine schematische Ansicht der Ausführungsform der Scanner-Einrichtung nach Fig. 4 im Scanmodus und eingezeichneten Strahlengängen;
- Fig. 6 und 7: zeigen eine Gegenüberstellung der Ausführungsform der Scanner-Einrichtung nach Fig. 1 im Einrichtmodus und im Scanmodus bei eingeführter Hand des Kunden;
- Fig. 8: zeigt eine schematische Seitenansicht einer zweiten Ausführungsform eines Selbstbedienungsautomaten; und
- Fig. 9: zeigt ein schematisches Blockschaltbild eines Ausführungsbeispiels eines Verfahrens zum Betreiben eines Selbstbedienungsautomaten.

In den Figuren sind gleiche oder funktionsgleiche Elemente mit denselben Bezugszeichen versehen worden, sofern nichts anderes angegeben ist.

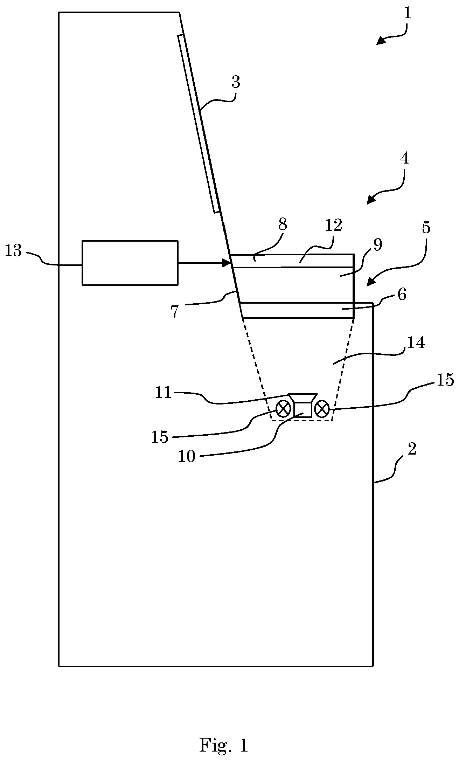

In Fig. 1 ist eine schematische Seitenansicht einer ersten Ausführungsform eines Selbstbedienungsautomaten 1 dargestellt. Der Selbstbedienungsautomat 1 ist beispielsweise ein Geldautomat, ein Kontoserviceterminal, ein Dienstleistungsautomat, ein Selbstverkäufer oder eine Paketstation.

Der Selbstbedienungsautomat 1 weist ein Gehäuse 2, ein an dem Gehäuse 2 angeordnetes Display 3 und eine Scanner-Einrichtung 4 auf, welche an dem Gehäuse 2 angeordnet ist und zumindest teilweise in das Gehäuse 2 hineinragen kann.

Die Scanner-Einrichtung 4 ist dazu eingerichtet, ein Objekt O zu scannen. Das Objekt O ist beispielsweise ein Dokument, wie ein Papier-Dokument. Das Dokument O kann auch als ein elektronisches Dokument ausgebildet sein. Ferner kann das Objekt O ein Identitätsnachweis, wie beispielsweise ein Reisepass, oder eine bildhafte Codedarstellung, beispielsweise auf einem Brief oder auf einem Paket sein.

Die Scanner-Einrichtung 4 hat einen Scannerschacht 5 mit einem transparenten Boden 6, einer Rückwand 7, einem Deckel 8 und zwei Seitenwänden 9. Unterhalb des transparenten Bodens 6 ist ein optischer Sensor 10 zum Aufnehmen eines optischen Sensorsignals eines über dem transparenten Boden 6 angeordneten Objekts O vorgesehen. Der optische Sensor 10 ist insbesondere eine Kamera, vorzugsweise mit vorgeschalteter Optik 11. Die Kamera 10 mit der vorgeschalteten Optik 11 ist in einem Scannertrichter 14 unterhalb des transparenten Bodens 6 angeordnet.

Wie in Fig. 1 gezeigt, kann auch eine Beleuchtungseinheit 15 zusätzlich in dem Scannertrichter 14 vorgesehen sein. In dem Beispiel der Fig. 1 weist die Beleuchtungseinheit 15 zwei Lichtquellen auf, die links und rechts neben der Kamera 10 in dem Scannertrichter 14 angeordnet sind. Vorzugsweise sind die Lichtquellen rund um die Kamera 10 angeordnet. Die Beleuchtungseinheit 15 umfasst daher eine Vielzahl von Lichtquellen. Vorzugsweise sind diese Lichtquellen LED's auf Grund der geringeren Verlustleistung und dadurch einhergehenden Wärmebildung.

Der Deckel 8 hat einen schaltbaren Lichtschutz 12 mit zwei Betriebsarten umfassend einen transparenten Modus und einen intransparenten Modus. Außerdem umfasst der Selbstbedienungsautomat 1 eine Steuereinheit 13, welche zum Umschalten des schaltbaren Lichtschutzes 12 zwischen dem transparenten Modus und dem intransparenten Modus eingerichtet ist.

In dem intransparenten Modus kann der optische Sensor 10 das optische Sensorsignal des Objekts O durch das Einschalten des Lichtschutzes 12 ohne störendes Streulicht F von der Hinterseite des Objekts O durch den transparenten Boden 6 hindurch aufnehmen. Damit kann der intransparente Modus auch als Scanmodus bezeichnet werden.

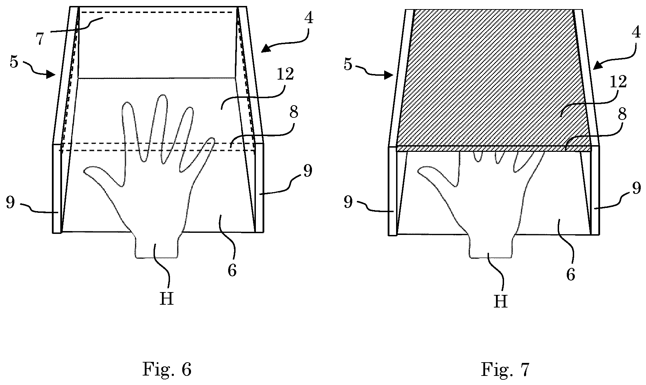

Der transparente Modus kann auch als Einrichtmodus bezeichnet werden. Einrichtmodus deshalb, weil in diesem Einrichtmodus der Benutzer oder Kunde seine eigene Hand durch den transparenten Lichtschutz 12 sehen kann und das zu scannende Objekt O entsprechend auf dem transparenten Boden 6 der Scanner-Einrichtung 4 ausrichten kann (siehe auch Fig. 6).

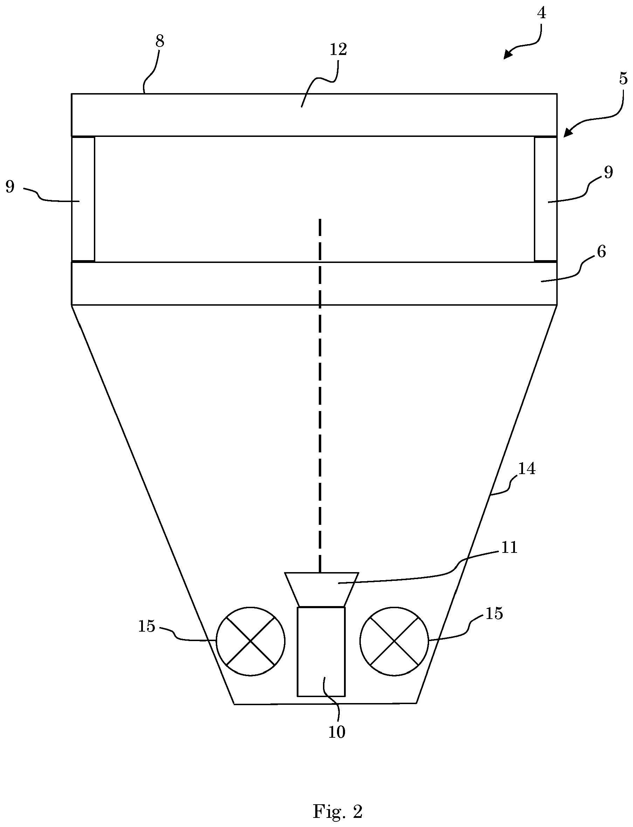

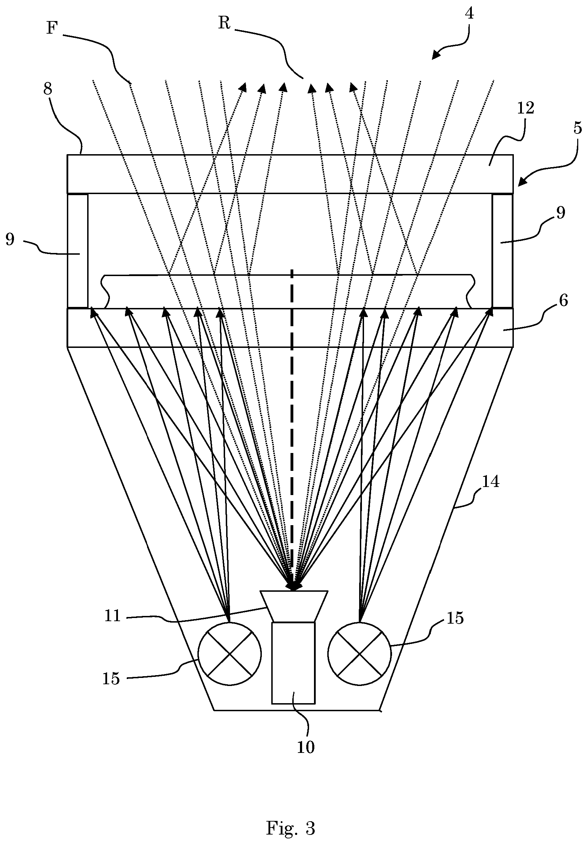

Hierzu zeigt die Fig. 2 eine schematische Ansicht der Ausführungsform der Scanner-Einrichtung 4 nach Fig. 1 im Einrichtmodus ohne Strahlengänge. Der Einrichtmodus ist dadurch gekennzeichnet, dass der schaltbare Lichtschutz 12 im transparenten Modus ist. Dies ist in Fig. 2 dadurch illustriert, dass der den schaltbaren Lichtschutz 12 repräsentierende Kasten in Fig. 2 (wie auch in Fig. 3) ohne Schraffur gezeichnet ist. Ferner zeigt die Fig. 3 die Ausführungsform der Scanner-Einrichtung 4 nach Fig. 2 im Einrichtmodus und eingezeichneten Strahlengängen vom Fremdlicht F sowie der Beleuchtungseinheit 15, zur Kamera 10. Dabei kann einerseits das Licht der Beleuchtungseinheit 15 den Benutzer beim Einrichten des Objekts O auf dem Boden 6 unterstützen. Andererseits kann der Benutzer beim Einrichten des Objekts O sowohl das Objekt O - hier dargestellt durch das Rücklicht R mit den dazugehörigen Strahlen - als auch seine Hand - wenn sich diese im Schacht befindet - durch den transparenten Lichtschutz 12 hindurch sehen, wodurch der Benutzer vielmehr die Angst vor dem Schacht genommen wird, aber auch die Einrichtung des Objekts O erleichtert wird.

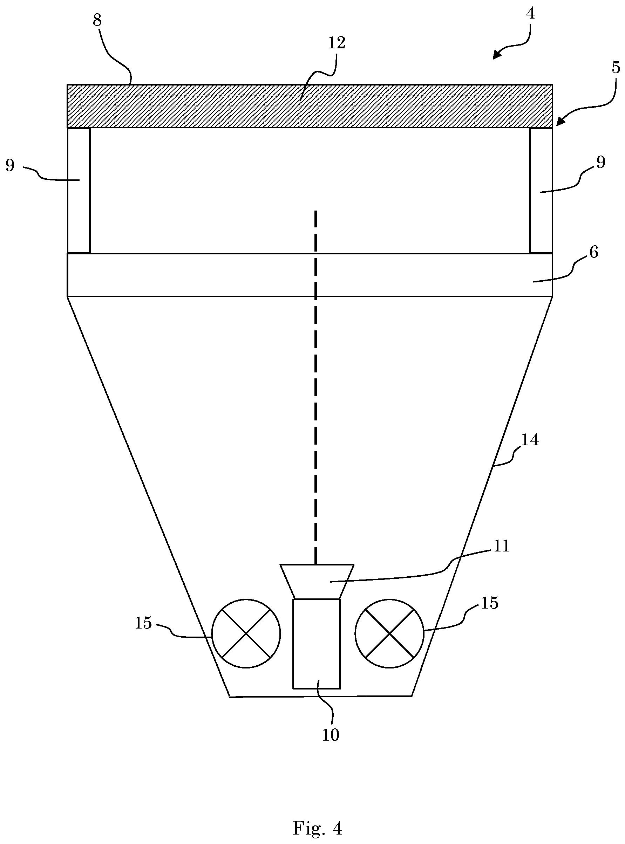

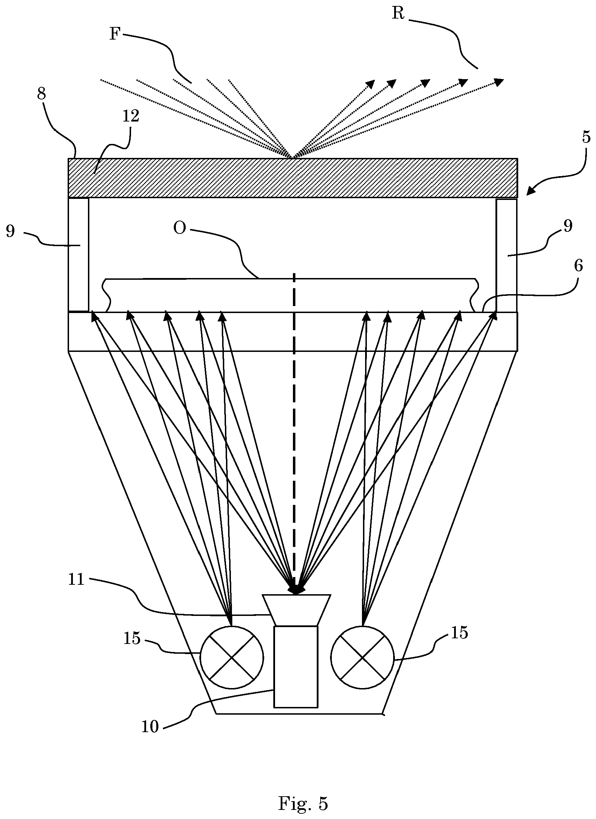

Des Weiteren zeigt die Fig. 4 die Ausführungsform der Scanner-Einrichtung 4 nach Fig. 1 im Scanmodus und die Fig. 5 zeigt die Ausführungsform der Scanner-Einrichtung 4 nach Fig. 4 im Scanmodus und eingezeichneten Strahlengängen. Die Fig. 4 (Scanmodus) unterscheidet sich von der Fig. 2 (Einrichtmodus) dahingehend, dass der den schaltbaren Lichtschutz 12 repräsentierende Kasten in Fig. 4 (sowie auch in Fig. 5) mit Schraffur gezeichnet ist.

Die Fig. 5 zeigt die Scanner-Einrichtung 4 nach Fig. 4 im Scanmodus und eingezeichneten Strahlengängen, und zwar von der Beleuchtungseinheit 15 nach Reflexion am Objekt O zur Kamera 10 und von Fremdlicht F, welches am Lichtschutz 12 reflektiert wird, und daher gleich dem Rücklicht R ist, außen am Selbstbedienungsautomaten 1. Demnach kann die Kamera 10 das optische Sensorsignal des Objekts O, welches auf dem Boden 6 liegt, ohne störendes Streulicht F von der Hinterseite des Objekts O durch das Einschalten des Lichtschutzes 12 aufnehmen. Die Beleuchtungseinheit 15 unterstützt das Aufnehmen, wie in Fig. 5 durch die Strahlengänge gezeigt.

Hierzu zeigen die Fig. 6 und 7 eine Gegenüberstellung des Ausführungsform der Scanner-Einrichtung 4 nach Fig. 1 im Einrichtmodus (Fig. 6) und im Scanmodus (Fig. 7) bei eingeführter Hand des Kunden. Um dem Kunden die Angst zu nehmen, wird der Lichtschutz 12 während der Einrichtphase in den transparenten Modus gemäß Fig. 6 geschaltet, um diesen - insbesondere nur während der kurzen Scanphase - in den intransparenten Modus gemäß Fig. 7 zu schalten. Durch die Umschaltung des Lichtschutzes 12 wird das ungewollte Streulicht bzw. Rücklicht F gemäß Fig. 5 reduziert und das Nutzlicht der Kamera 10 kann seine Wirkung entfalten. Insbesondere können auf dem aufgenommenen Bild des Objekts O eventuelle Abbildungen oder Text von der Rückseite des Objekts O unterdrückt werden, wenn das Fremdlicht F oder Durchlicht abgeschwächt oder gar auf null reduziert wird.

Hierzu kann der Selbstbedienungsautomat 1 auch eine Zeichenerkennungseinheit (nicht gezeigt) aufweisen, welche zur automatischen Erkennung von Zeichen in dem Objekt O basierend auf dem aufgenommenen Bild des Objekts O eingerichtet ist.

Der mit Bezug zu den Fig. 1 bis 7 erläuterte schaltbare Lichtschutz 12 ist insbesondere als ein elektrisch schaltbarer Lichtschutz ausgebildet. Dabei ist die Steuereinheit 13 insbesondere dazu eingerichtet, den elektrisch schaltbaren Lichtschutz 12 mittels einer elektrischen Spannung zwischen dem transparenten Modus und dem intransparenten Modus umzuschalten.

Der schaltbare Lichtschutz 12 ist beispielsweise als eine PDLC-Folie ausgebildet. Alternativ kann der schaltbare Lichtschutz 12 auch eine Mehrzahl von PDLC-Folienschichten aufweisen. Der Deckel 8 weist beispielsweise eine Trägerschicht auf, auf welcher der schaltbare Lichtschutz 12 laminiert ist.

Die Trägerschicht umfasst insbesondere ein Acrylglas, welches dazu eingerichtet ist, auf eine Oberfläche des Acrylglases einfallendes Licht über seine Seitenflächen abzuleiten.

Alternativ kann der schaltbare Lichtschutz 12 auch ein elektrochromes Glas aufweisen.

Die Steuereinheit 13 ist insbesondere dazu eingerichtet, zwischen dem transparenten Modus und dem intransparenten Modus in Abhängigkeit eines Trigger-Signals umzuschalten. Das Trigger-Signal kann beispielsweise von einer Applikations-Software des Selbstbedienungsautomaten 1 bereitgestellt werden. Das Trigger-Signal kann auch bei einem Betätigen einer vorbestimmten Taste des Selbstbedienungsautomaten 1, insbesondere einer vorbestimmten Taste eines Touchsensors (nicht gezeigt) des Displays 3 generiert werden.

Für den Fall, dass als optischer Sensor eine Kamera 10 mit Autofokus verwendet wird, kann das Trigger-Signal auch in Abhängigkeit eines Scharfstellens durch den Autofokus der Kamera 10 auf dem Objekt generiert werden.

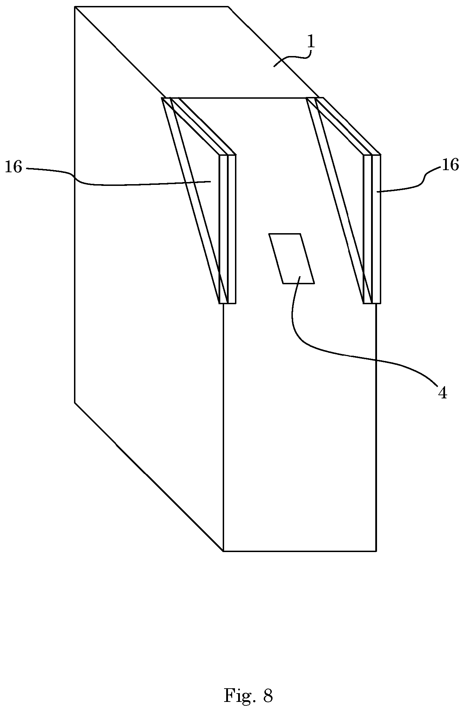

Des Weiteren zeigt die Fig. 8 eine schematische Seitenansicht einer zweiten Ausführungsform eines Selbstbedienungsautomaten 1.

Die zweite Ausführungsform des Selbstbedienungsautomaten 1 basiert auf der ersten Ausführungsform gemäß der Fig. 1 bis 7 und umfasst sämtliche Merkmale der ersten Ausführungsform. Darüber hinaus hat die zweite Ausführungsform gemäß Fig. 8 auf einer jeden Seite der Scanner-Einrichtung 4 eine Diskretionswange 16. Die jeweilige Diskretionswange 16 kann vorzugsweise mittels einer Lichtquelle als Sichtschutz aktiviert werden. In bestimmten Fällen kann die Diskretionswange 16 als Sichtschutz auch deaktiviert werden, wenn beispielsweise ein Bankberater einen Kunden bei der Benutzung des Selbstbedienungsautomaten 1 unterstützt.

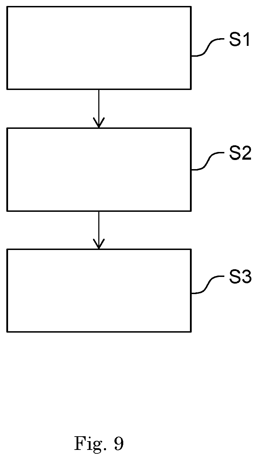

Fig. 9 zeigt ein schematisches Blockschaltbild eines Ausführungsbeispiels eines Verfahrens zum Betreiben eines Selbstbedienungsautomaten 1. Der Selbstbedienungsautomat 1 ist beispielsweise gemäß der ersten Ausführungsform nach den Fig. 1 bis 7 oder gemäß der zweiten Ausführungsform nach Fig. 8 ausgebildet.

Das Verfahren der Fig. 9 umfasst die Schritte S1 bis S3:
In Schritt S1 wird die Scanner-Einrichtung 4 des Selbstbedienungsautomaten 1 im Einrichtmodus betrieben (siehe Fig. 2, 3 sowie Fig. 6).

In Schritt S2 wird ein als Teil des Deckels 8 ausgebildeter schaltbarer Lichtschutz 2 von dem Einrichtmodus (oder transparenter Modus) in den Scanmodus (intransparenter Modus) umgeschaltet.

In Schritt S3 wird ein optisches Sensorsignal eines über dem transparenten Boden 6 angeordneten Objekts O mittels eines optischen Sensors 10 aufgenommen, insbesondere gescannt.

Obwohl die vorliegende Erfindung anhand von Ausführungsformen beschrieben wurde, ist sie vielfältig modifizierbar. Insbesondere sind Merkmale der Ausführungsformen auch auf einen Überweisungsautomaten oder einen Bankkontoauszugsdrucker anwendbar.

### BEZUGSZEICHENLISTE

- 1: Selbstbedienungsautomat
- 2: Gehäuse
- 3: Display
- 4: Scanner-Einrichtung
- 5: Scannerschacht
- 6: Boden
- 7: Rückwand
- 8: Deckel
- 9: Seitenwand
- 10: optischer Sensor
- 11: Optik des optischen Sensors
- 12: schaltbarer Lichtschutz
- 13: Steuereinheit
- 14: Scannertrichter
- 15: Beleuchtungseinheit
- 16: Diskretionswange

- H: Hand
- O: Objekt
- F: Fremdlicht
- R: Rücklicht/Streulicht
- S1: Verfahrensschritt
- S2: Verfahrensschritt
- S3: Verfahrensschritt

## Patentansprüche

1. Selbstbedienungsautomat (1) mit einer Scanner-Einrichtung (4) zum Scannen von Objekten (O), welche einen Scannerschacht (5) mit einem transparenten Boden (6), einer Rückwand (7) und einem Deckel (8) und einen unterhalb des transparenten Bodens (6) angeordneten optischen Sensor (10) zum Aufnehmen eines optischen Sensorsignals eines über dem transparenten Boden (6) angeordneten Objekts (O) aufweist,
wobei der Deckel (8) einen schaltbaren Lichtschutz (12) mit zwei Betriebsarten umfassend einen transparenten Modus und einen intransparenten Modus aufweist und eine Steuereinheit (13) vorgesehen ist, welche zum Umschalten des schaltbaren Lichtschutzes (12) zwischen dem transparenten Modus und dem intransparenten Modus eingerichtet ist,
wobei die Steuereinheit (13) dazu eingerichtet ist, zwischen dem transparenten Modus und dem intransparenten Modus in Abhängigkeit eines Trigger-Signals umzuschalten, wobei das Trigger-Signal von einer Applikations-Software des Selbstbedienungsautomaten (1) bereitgestellt ist, und
wobei der optische Sensor eine Kamera (10) mit Autofokus aufweist, wobei das Trigger-Signal in Abhängigkeit eines Scharfstellens durch den Autofokus der Kamera (10) auf dem Objekt (O) generiert wird.

2. Selbstbedienungsautomat nach Anspruch 1,
**dadurch gekennzeichnet,**
**dass** der schaltbare Lichtschutz (12) als ein elektrisch schaltbarer Lichtschutz ausgebildet ist, wobei die Steuereinheit (13) dazu eingerichtet ist, den elektrisch schaltbaren Lichtschutz (12) mittels einer elektrischen Spannung zwischen dem transparenten Modus und dem intransparenten Modus umzuschalten.

3. Selbstbedienungsautomat nach Anspruch 2,
**dadurch gekennzeichnet,**
**dass** der schaltbare Lichtschutz (12) eine PDLC-Folie oder eine Mehrzahl von PDLC-Folienschichten aufweist.

4. Selbstbedienungsautomat nach einem der Ansprüche 1 bis 3,
**dadurch gekennzeichnet,**
**dass** der Deckel (8) eine Trägerschicht aufweist, auf welcher der schaltbare Lichtschutz (12) angeordnet ist, insbesondere laminiert ist.

5. Selbstbedienungsautomat nach Anspruch 2,
**dadurch gekennzeichnet,**
**dass** der schaltbare Lichtschutz (12) ein elektrochromes Glas aufweist.

6. Selbstbedienungsautomat nach Anspruch 4,
**dadurch gekennzeichnet,**
**dass** die Trägerschicht ein Acrylglas umfasst, welches dazu geeignet ist, auf eine Oberfläche des Acrylglases einfallendes Licht über seine Seitenflächen abzuleiten.

7. Selbstbedienungsautomat nach einem der Ansprüche 1 bis 6,
**dadurch gekennzeichnet,**
**dass** der optische Sensor als eine Kamera (10) mit vorgeschalteter Optik (11) ausgebildet ist, wobei die Kamera (10) mit der vorgeschalteten Optik (11) in einem Scannertrichter (14) unterhalb des transparenten Bodens (6) angeordnet ist.

8. Selbstbedienungsautomat nach Anspruch 7,
**dadurch gekennzeichnet,**
**dass** der optische Sensor ferner eine der Kamera (10) zugeordnete und in dem Scannertrichter (14) angeordnete Beleuchtungseinheit (15) aufweist.

9. Selbstbedienungsautomat nach einem der Ansprüche 1 bis 8,
**dadurch gekennzeichnet,**
**dass** der Selbstbedienungsautomat (1) als ein Geldautomat, als ein Kontoserviceterminal, als ein Dienstleistungsautomat, als ein Selbstverkäufer oder als eine Paketstation ausgebildet ist.

10. Selbstbedienungsautomat nach einem der Ansprüche 1 bis 9,
**dadurch gekennzeichnet,**
**dass** das Objekt (O) ein Dokument, ein Papier-Dokument, ein elektronisches Dokument, ein Identitätsnachweis, beispielsweise ein Reisepass, oder eine bildhafte Codedarstellung, beispielsweise auf einen Brief oder auf einem Paket, ist.

11. Selbstbedienungsautomat nach einem der Ansprüche 1 bis 10, **gekennzeichnet durch**
eine Zeichenerkennungseinheit zur automatischen Erkennung von Zeichen in dem Objekt (O) basierend auf dem aufgenommenen optischen Sensorsignal des Objekts (O).

12. Verfahren zum Betreiben eines Selbstbedienungsautomaten (1) mit einer Scanner-Einrichtung (4) zum Scannen von Objekten (O), welche einen Scannerschacht (5) mit einem transparenten Boden (6), einer Rückwand (7) und einem Deckel (8) und einen unterhalb des transparenten Bodens (6) angeordneten optischer Sensor (10) zum Aufnehmen eines optischen Sensorsignals eines über dem transparenten Boden (6) angeordneten Objekts (O) aufweist,
wobei ein Umschalten (S2) eines als Teil des Deckels (8) ausgebildeten schaltbaren Lichtschutzes (12) zwischen zwei Betriebsarten umfassend einen transparenten Modus und einen intransparenten Modus erfolgt,
wobei das Umschalten durch eine Steuereinheit (13) zwischen dem transparenten Modus und dem intransparenten Modus in Abhängigkeit eines Trigger-Signals, welches von einer Applikations-Software des Selbstbedienungsautomaten (1) bereitgestellt ist, erfolgt, und
wobei der optische Sensor eine Kamera (10) mit Autofokus aufweist, wobei das Trigger-Signal in Abhängigkeit eines Scharfstellens durch den Autofokus der Kamera (10) auf dem Objekt (O) generiert wird.

13. Computerprogrammprodukt, umfassend Befehle, die bei der Ausführung des Programms durch eine programmgesteuerte Einrichtung diese veranlassen, das Verfahren nach Anspruch 12 auszuführen.

## Claims

1. Self-service machine (1) with a scanner device (4) for scanning objects (O), comprising a scanner shaft (5) with a transparent base (6), a rear wall (7) and a cover (8) and an optical sensor (10) arranged below the transparent base (6) for recording an optical sensor signal of an object (O) arranged above the transparent base (6),
wherein the cover (8) comprises a switchable light protection (12) with two operating modes comprising a transparent mode and a non-transparent mode and a control unit (13) is provided, which is configured to switch the switchable light protection (12) between the transparent mode and the non-transparent mode,
wherein the control unit (13) is configured to switch between the transparent mode and the non-transparent mode depending on a trigger signal, wherein the trigger signal is provided by an application software of the self-service machine (1), and
wherein the optical sensor comprises a camera (10) with autofocus, wherein the trigger signal is generated depending on focusing by the autofocus of the camera (10) on the object (O).

2. Self-service machine according to claim 1,
**characterized in that**
the switchable light protection (12) is designed as an electrically switchable light protection, wherein the control unit (13) is configured to switch the electrically switchable light protection (12) between the transparent mode and the non-transparent mode by means of an electrical voltage.

3. Self-service machine according to claim 2,
**characterized in that**
the switchable light protection (12) comprises a PDLC film or a plurality of PDLC film layers.

4. Self-service machine according to one of claims 1 to 3,
**characterized in that**
the cover (8) comprises a carrier layer, on which the switchable light protection (12) is arranged, in particular laminated.

5. Self-service machine according to claim 2,
**characterized in that**
the switchable light protection (12) comprises an electrochromic glass.

6. Self-service machine according to claim 4,
**characterized in that**
the carrier layer comprises an acrylic glass, which is suitable for deflecting light incident on a surface of the acrylic glass via its side surfaces.

7. Self-service machine according to one of claims 1 to 6,
**characterized in that**
the optical sensor is designed as a camera (10) with upstream optics (11), wherein the camera (10) with the upstream optics (11) is arranged in a scanner funnel (14) below the transparent base (6).

8. Self-service machine according to claim 7,
**characterized in that**
the optical sensor further comprises an illumination unit (15) assigned to the camera (10) and arranged in the scanner funnel (14).

9. Self-service machine according to one of claims 1 to 8,
**characterized in that**
the self-service machine (1) is designed as an automated teller machine, as an account service terminal, as a service machine, as a self-seller or as a parcel station.

10. Self-service machine according to one of claims 1 to 9,
**characterized in that**
the object (O) is a document, a paper document, an electronic document, a proof of identity, for example a passport, or a pictorial code representation, for example on a letter or on a parcel.

11. Self-service machine according to one of claims 1 to 10,
**characterized by**
a character recognition unit for automatic recognition of characters in the object (O) based on the recorded optical sensor signal of the object (O).

12. Method for operating a self-service machine (1) with a scanner device (4) for scanning objects (O), comprising a scanner shaft (5) with a transparent base (6), a rear wall (7) and a cover (8) and an optical sensor (10) arranged below the transparent base (6) for recording an optical sensor signal of an object (O) arranged above the transparent base (6),
wherein a switchable light protection (12) designed as part of the cover (8) is switched (S2) between two operating modes comprising a transparent mode and a non-transparent mode,
wherein the switching between the transparent mode and the non-transparent mode is performed by a control unit (13) depending on a trigger signal, which is provided by an application software of the self-service machine (1), and
wherein the optical sensor comprises a camera (10) with autofocus, wherein the trigger signal is generated depending on focusing by the autofocus of the camera (10) on the object (O).

13. Computer program product which causes the method according to claim 12 to be carried out on a program-controlled device.

## Revendications

1. Automate de libre-service (1) avec un dispositif de balayage (4) pour le balayage d'objets (O), lequel présente un puits de balayage (5) avec un fond transparent (6), une paroi arrière (7) et un couvercle (8) et un capteur optique (10) disposé sous le fond transparent (6) pour la réception d'un signal de capteur optique d'un objet (O) disposé au-dessus du fond transparent (6),
dans lequel le couvercle (8) présente une protection contre la lumière commutable (12) avec deux modes de fonctionnement comprenant un mode transparent et un mode non transparent et une unité de commande (13) est prévue, laquelle est aménagée pour commuter la protection contre la lumière commutable (12) entre le mode transparent et le mode non transparent,
dans lequel l'unité de commande (13) est aménagée pour commuter entre le mode transparent et le mode non transparent en fonction d'un signal de déclenchement, dans lequel le signal de déclenchement est fourni par un logiciel d'application de l'automate de libre-service (1), et
dans lequel le capteur optique présente une caméra (10) avec autofocus, dans lequel le signal de déclenchement est généré en fonction d'une mise au point par l'autofocus de la caméra (10) sur l'objet (O).

2. Automate de libre-service selon la revendication 1,
**caractérisé en ce que**
la protection contre la lumière commutable (12) est réalisée sous forme de protection contre la lumière commutable électriquement, dans lequel l'unité de commande (13) est aménagée pour commuter la protection contre la lumière commutable électriquement (12) au moyen d'une tension électrique entre le mode transparent et le mode non transparent.

3. Automate de libre-service selon la revendication 2,
**caractérisé en ce que**
la protection contre la lumière commutable (12) présente un film PDLC ou une pluralité de couches de film PDLC.

4. Automate de libre-service selon l'une des revendications 1 à 3,
**caractérisé en ce que**
le couvercle (8) présente une couche de support sur laquelle la protection contre la lumière commutable (12) est disposée, en particulier stratifiée.

5. Automate de libre-service selon la revendication 2,
**caractérisé en ce que**
la protection contre la lumière commutable (12) présente un verre électrochrome.

6. Automate de libre-service selon la revendication 4,
**caractérisé en ce que**
la couche de support comprend un verre acrylique qui est approprié pour dévier la lumière incidente sur une surface du verre acrylique par le biais de ses surfaces latérales.

7. Automate de libre-service selon l'une des revendications 1 à 6,
**caractérisé en ce que**
le capteur optique est réalisé sous la forme d'une caméra (10) avec une optique (11) montée en amont, la caméra (10) avec l'optique (11) montée en amont étant disposée dans un entonnoir de balayage (14) sous le fond transparent (6).

8. Automate de libre-service selon la revendication 7,
**caractérisé en ce que**
le capteur optique présente en outre une unité d'éclairage (15) associée à la caméra (10) et disposée dans l'entonnoir de balayage (14).

9. Automate de libre-service selon l'une des revendications 1 à 8,
**caractérisé en ce que**
l'automate de libre-service (1) est réalisé sous la forme d'un distributeur automatique de billets, d'un terminal de service de compte, d'un automate de prestation de services, d'un distributeur automatique ou d'une station de colis.

10. Automate de libre-service selon l'une des revendications 1 à 9,
**caractérisé en ce que**
l'objet (O) est un document, un document papier, un document électronique, une preuve d'identité, par exemple un passeport, ou une représentation de code sous forme d'image, par exemple sur une lettre ou sur un colis.

11. Automate de libre-service selon l'une des revendications 1 à 10,
**caractérisé par**
une unité de reconnaissance de caractères pour la reconnaissance automatique de caractères dans l'objet (O) sur la base du signal de capteur optique reçu de l'objet (O).

12. Procédé pour faire fonctionner un automate de libre-service (1) avec un dispositif de balayage (4) pour le balayage d'objets (O), lequel présente un puits de balayage (5) avec un fond transparent (6), une paroi arrière (7) et un couvercle (8) et un capteur optique (10) disposé sous le fond transparent (6) pour la réception d'un signal de capteur optique d'un objet (O) disposé au-dessus du fond transparent (6),
dans lequel une commutation (S2) d'une protection contre la lumière commutable (12) réalisée sous forme de partie du couvercle (8) a lieu entre deux modes de fonctionnement comprenant un mode transparent et un mode non transparent, dans lequel la commutation a lieu par une unité de commande (13) entre le mode transparent et le mode non transparent en fonction d'un signal de déclenchement, lequel est fourni par un logiciel d'application de l'automate de libre-service (1), et
dans lequel le capteur optique présente une caméra (10) avec autofocus, dans lequel le signal de déclenchement est généré en fonction d'une mise au point par l'autofocus de la caméra (10) sur l'objet (O).

13. Produit de programme informatique, lequel provoque la réalisation du procédé selon la revendication 12 sur un dispositif commandé par programme.
